# EUROPEAN PATENT APPLICATION

(11) **EP 4 838 396 A1**
(43) Date of publication of application: **11.11.2026**
(21) Application number: 26176846.9
(22) Date of filing: 06.05.2026
(51) Int. Cl.: G06F 21/60, H04L 9/40, G06F 3/12

(54) **IMAGE FORMING DEVICE, METHOD FOR CONTROLLING IMAGE FORMING DEVICE, AND IMAGE FORMING SYSTEM**

(30) Priority: 08.05.2025 JP 2025077825
(71) Applicant: Seiko Epson Corporation, Tokyo 160-8801 (JP)
(72) Inventor: KAWABATA, Taiga, Suwa-shi, 392-8502 (JP)
(74) Representative: Lewis Silkin LLP

(57) **Abstract**

An image forming device includes a controller and a storage section storing an encryption program, the image forming device being configured to be connected to a terminal device. After receiving, from the terminal device, a first command for requesting a response related to encryption support, and subsequently receiving, from the terminal device, a second command for requesting a response related to communication, the controller transmits, to the terminal device, a first response in response to the first command, the first response indicating that the image forming device provides the encryption support, and subsequently transmits, to the terminal device, a second response in response to the second command, and thereafter reads the encryption program from the storage section to execute the encryption program, and performs encrypted communication with the terminal device.

## Description

The present application is based on, and claims priority from JP Application Serial Number 2025-077825, filed May 8, 2025, the disclosure of which is hereby incorporated by reference herein in its entirety.

### BACKGROUND

### 1. Technical Field

The present disclosure relates to an image forming device, a method for controlling the image forming device, and an image forming system.

### 2. Related Art

In the related art, as disclosed in JP-A-2004-199470, a printer is known as an image forming device that receives and records encrypted data from a user terminal as the terminal device.

However, the above-described image forming device is not convenient when the terminal device causes an image forming device that does not support encryption to perform recording.

### SUMMARY

According to an aspect of the present disclosure, an image forming device includes a controller and a storage section storing an encryption program, the image forming device being configured to be connected to a terminal device, wherein after receiving, from the terminal device, a first command for requesting a response related to encryption support, and subsequently receiving, from the terminal device, a second command for requesting a response related to communication, the controller transmits, to the terminal device, a first response in response to the first command, the first response indicating that the image forming device provides the encryption support, and subsequently transmits, to the terminal device, a second response in response to the second command, and thereafter reads the encryption program from the storage section to execute the encryption program, and performs encrypted communication with the terminal device.

According to an aspect of the present disclosure, in a method for controlling an image forming device that stores an encryption program and that is configured to be connected to a terminal device, the method includes, after receiving, from the terminal device, a first command for requesting a response related to encryption support, and subsequently receiving, from the terminal device, a second command for requesting a response related to communication, transmitting, to the terminal device, a first response in response to the first command, the first response indicating that the image forming device provides the encryption support, and subsequently transmitting, to the terminal device, a second response in response to the second command, and thereafter executing the stored encryption program, and performing encrypted communication with the terminal device.

According to an aspect of the present disclosure, an image forming system includes a terminal device and an image forming device, wherein the terminal device transmits, to the image forming device, a first command for requesting a response related to encryption support, and subsequently transmits, to the image forming device, a second command for requesting a response related to communication, and the image forming device transmits, to the terminal device, a first response in response to the first command, the first response indicating that the image forming device provides the encryption support, and subsequently transmits, to the terminal device, a second response in response to the second command, and thereafter the terminal device and the image forming device execute respective stored encryption programs, and perform encrypted communication with each other.

### BRIEF DESCRIPTION OF THE DRAWINGS

FIG. 1 is a block diagram showing a configuration of a first image forming system including a first image forming device that supports encryption.
FIG. 2 is a block diagram showing a configuration of a second image forming system including a second image forming device that does not support encryption.
FIG. 3 is a state transition diagram showing a method for controlling the first image forming system of FIG. 1.
FIG. 4 is a state transition diagram showing a method for controlling the second image forming system of FIG. 2.
FIG. 5 is a flowchart showing a method for controlling the first image forming device that supports encryption.

### DESCRIPTION OF EMBODIMENTS

### 1. Configuration of image forming system that supports encryption

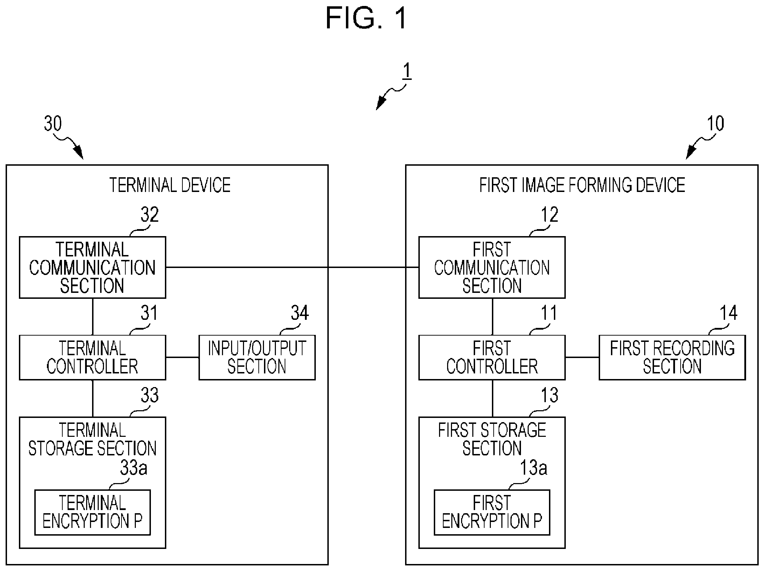

As shown in FIG. 1, a first image forming system 1 that supports encryption includes a first image forming device 10 that can support encryption and a terminal device 30 that can support encryption, as will be described later.

The first image forming device 10 includes a first controller 11, a first communication section 12, a first storage section 13, and a first recording section 14.

Hereinafter, the first image forming system 1 is simply referred to as an image forming system, the first image forming device 10 is simply referred to as an image forming device, the first controller 11 is simply referred to as a controller, the first communication section 12 is simply referred to as a communication section, the first storage section 13 is simply referred to as a storage section, and the first recording section 14 is simply referred to as a recording section.

The first controller 11 integrally controls respective sections of the first image forming device 10. The first controller 11 includes a central processing unit (CPU), a universal asynchronous receiver transmitter (UART) that manages input and output, a field programmable gate array (FPGA) and a programmable logic device (PLD) that are logic circuits, and the like.

The first controller 11 is referred to as a processor. Note that the CPU of the first controller 11 may be particularly referred to as a processor.

The first storage section 13 includes memories such as a flash read only memory (ROM) and a hard disk drive (HDD) that are rewritable nonvolatile memories, and a random access memory (RAM) that is a volatile memory. Note that the nonvolatile memory of the first storage section 13 may include a solid state drive (SSD).

The CPU of the first controller 11 reads a program stored in the nonvolatile memory of the first storage section 13 and executes the program using the volatile memory of the first storage section 13 as a work area.

The first communication section 12 includes a circuit capable of performing wireless or wired communication. The first communication section 12 includes an antenna when the circuit can perform wireless communication. The first communication section 12 includes a connector when the circuit can perform wired communication.

Note that the first image forming device 10 transmits and receives data to and from the communication destination via the first communication section 12, but in the following description, the fact that the transmission and reception of the data is performed via the first communication section 12 is omitted for the sake of simplicity. The same applies to a terminal communication section 32 of the terminal device 30 and a second communication section 22 of a second image forming device 20 described below.

The first recording section 14 includes a recording mechanism such as a transport roller that transports a medium and a recording head that performs recording on the medium (both of which are not shown).

The recording head is, for example, of an ink jet type, and performs recording on a medium by ejecting ink of a plurality of colors such as cyan, magenta, yellow, and black (CMYK). The recording head may be of a thermal type, an electrophotographic type, or the like. The medium on which the first recording section 14 performs recording is, for example, plain paper, synthetic paper, photographic paper, a film, or the like.

Note that the first image forming device 10 may include a scanner (not shown). In this case, the first image forming device 10 can perform medium processing such as scanning, copying, and faxing in addition to the above-described recording. Such a first image forming device 10 is referred to as a multifunction peripheral.

Further, the first image forming device 10 may include an input/output section (not shown) similar to an input/output section 34 of the terminal device 30 described later.

The terminal device 30 is, for example, a smartphone, a tablet terminal, a computer, or the like. The terminal device 30 includes a terminal controller 31, the terminal communication section 32, and a terminal storage section 33. Since the configuration of the terminal device 30 is substantially the same as the configuration of the first image forming device 10 described above, the description thereof will be omitted.

The terminal device 30 further includes the input/output section 34. The input/output section 34 is a user interface for a user.

The input/output section 34 is, for example, a touch panel display. The input/output section 34 includes a display panel serving as an output section displaying various types of information and a detection panel serving as an input section.

The detection panel is superposed on the display panel. The detection panel can detect an operation by a movement of a user's finger or the like using a method, such as a capacitive method, a resistive film method, or an optical method.

In the input/output section 34, the input section may be a keyboard, a mouse, a button, or the like, and the output section may be a stand-type liquid crystal display or the like.

### 2. Encrypted communication

The first storage section 13 of the first image forming device 10 stores a first encryption P 13a, which is a program for encrypting and decrypting data. Note that an "encryption P" indicates an encryption program. The first controller 11 can read the first encryption P 13a from the first storage section 13 to execute the first encryption P 13a, and encrypt and decrypt data.

For example, the first controller 11 can execute the first encryption P 13a to encrypt a plain text into a cipher text and transmit the cipher text, and can decrypt a received cipher text into a plain text. As described above, the first image forming device 10 supports encryption.

The terminal controller 31 and the terminal storage section 33 of the terminal device 30 also support encryption, as in the case of the first image forming device 10 described above. The terminal storage section 33 stores a terminal encryption P 33a similar to the first encryption P 13a, and the terminal controller 31 can execute the terminal encryption P 33a.

Hereinafter, communication in which the first image forming device 10 and the terminal device 30 encrypt and decrypt data is referred to as encrypted communication.

Hereinafter, the first encryption P 13a and the terminal encryption P 33a are collectively referred to as an encryption program. The encryption program may use, for example, Secure Sockets Layer (SSL) or Hypertext Transfer Protocol Secure (HTTPS), in addition to a common key encryption scheme and a public key encryption scheme, or may use a reversible compression algorithm such as run-length encoding or Huffman encoding.

### 3. Configuration of image forming system that does not support encryption

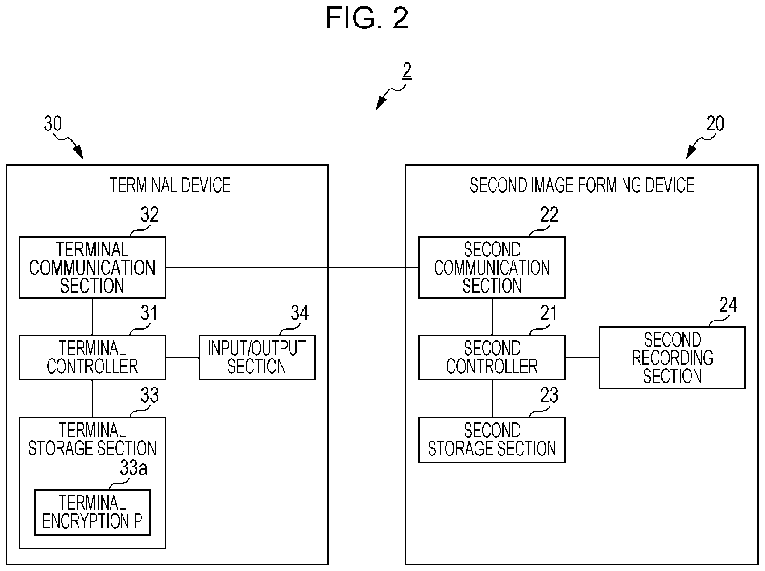

As shown in FIG. 2, a second image forming system 2 that does not support encryption includes the second image forming device 20 that does not support encryption and the terminal device 30 that supports encryption as in the terminal device 30 shown in FIG. 1.

The second image forming device 20 includes a second controller 21, the second communication section 22, a second storage section 23, and a second recording section 24. Since the configuration of the second image forming device 20 is substantially the same as the configuration of the first image forming device 10 described above, the description thereof will be omitted.

The second storage section 23 of the second image forming device 20 does not store the encryption program. The second controller 21 cannot encrypt and decrypt data, and the second image forming device 20 does not support encryption.

For example, when the terminal device 30 encrypts a plain text into a cipher text and transmits the cipher text to the second image forming device 20, the second image forming device 20 cannot decrypt the received cipher text into a plain text and records the received cipher text in a cipher text state.

The second image forming device 20 may include an input/output section (not shown) similar to the input/output section 34 of the terminal device 30 described above. Further, the second image forming device 20 may be a multifunction peripheral including a scanner (not shown).

### 4. Method for controlling image forming system that supports encryption

In the following description, the terminal controller 31 of the terminal device 30 and the first controller 11 of the first image forming device 10 that supports encryption perform their respective control, but the description will be given with the omission of the control being performed by each controller.

At the start of control, the terminal device 30 and the first image forming device 10 perform normal communication that is not encrypted communication. The normal communication is, for example, communication using plain text.

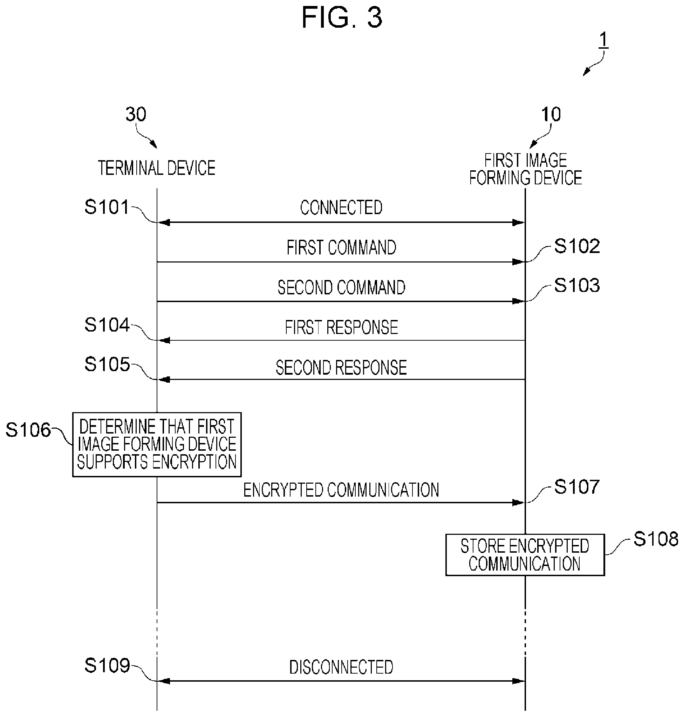

As shown in FIG. 3, the first image forming system 1 that supports encryption starts control, and the terminal communication section 32 of the terminal device 30 and the first communication section 12 of the first image forming device 10 are connected to each other (S101) and can communicate with each other.

The terminal device 30 transmits a first command to the first image forming device 10 (S102). In this case, the first command is a command for requesting the first image forming device 10 to provide a response related to encryption support. Next, the terminal device 30 transmits the second command to the first image forming device 10 (S103). In this case, the second command is a command for requesting the first image forming device 10 to provide a response related to communication.

In the first image forming device 10, the first encryption P 13a is stored in the first storage section 13, and the first image forming device 10 supports encryption. In response to the received first command, the first image forming device 10 generates a first response indicating that the first image forming device 10 supports encryption, and transmits the first response to the terminal device 30 (S104).

The first image forming device 10 can refer to the first storage section 13 and generate the first response based on the fact that the first encryption P 13a is stored.

Next, the first image forming device 10 checks the operation of the first communication section 12, generates, in response to the received second command, a second response indicating that the first image forming device 10 performs normal communication, and transmits the second response to the terminal device 30 (S105).

Based on the received first response, the terminal device 30 determines that the first image forming device 10 supports encryption (S106). The terminal device 30 reads the terminal encryption P 33a from the terminal storage section 33 to execute the terminal encryption P 33a, and performs encrypted communication with the first image forming device 10 (S107).

Even before receiving the second command, the terminal device 30 may determine that the first image forming device 10 supports encryption at the time of receiving the first response.

Based on the receipt of the encrypted communication from the terminal device 30, the first image forming device 10 stores the encrypted communication history in the first storage section 13 (S108).

Thereafter, the terminal device 30 and the first image forming device 10 perform encrypted communication with each other until the communication is disconnected (S109).

When the first image forming device 10 refers to the first storage section 13, and a history of encrypted communication is stored, the first image forming device 10 can perform encrypted communication with the terminal device 30. Transmission and reception of the first command and the second command, and the first response and the second response may not be performed again between the first image forming device 10 and the terminal device 30.

As described above, the first image forming device 10 can store the history of the encrypted communication in the first storage section 13, and perform the encrypted communication based on the stored history when communicating with the terminal device 30.

The terminal device 30 can transmit data to the first image forming device 10 through encrypted communication and cause the first recording section 14 to record the data.

When the first image forming device 10 determines that the data received through the encrypted communication is a control character as described later, the first image forming device 10 controls the corresponding command or discards the control character. When the first image forming device 10 determines that the data received through the encrypted communication is a character as described later, the first image forming device 10 causes the first recording section 14 to record the data.

Note that the first command may be a command for requesting identification information related to encryption support. The first image forming device 10 can also store, in the first storage section 13, identification information indicating that the first image forming device 10 supports encryption. The first image forming device 10 may refer to the first storage section 13 in response to the first command, generate, as the first response, the stored identification information indicating that encryption is supported, and transmit the first response to the terminal device 30.

Note that the second image forming device 20 does not store identification information indicating that the second image forming device 20 supports encryption. The second image forming device 20 does not transmit, to the terminal device 30, as the first response, the identification information indicating that encryption is supported.

In addition, the first command may be a command for requesting information of a so-called memory switch, that is, information indicating an ON state or an OFF state related to encryption support. The first image forming device 10 can store, in the first storage section 13, information of the memory switch in the ON state indicating that the first image forming device 10 supports encryption. The first image forming device 10 may refer to the first storage section 13 in response to the first command, generate the stored information of the memory switch in the ON state as the first response, and transmit the first response to the terminal device 30. Note that the OFF state is information indicating that encryption is not supported.

The second image forming device 20 does not store the information of the memory switch related to encryption support. The second image forming device 20 does not transmit the information of the memory switch related to encryption support to the terminal device 30 as the first response.

As described above, at the start of control, the terminal device 30 performs normal communication with the first image forming device 10 that supports encryption, and transmits the first command and the second command to the first image forming device 10. Based on the receipt of the first response and the second response from the first image forming device 10, the terminal device 30 can confirm that the first image forming device 10 supports encryption. Thereafter, the terminal device 30 can perform encrypted data communication with the first image forming device 10 and cause the first image forming device 10 to perform recording or the like.

### 5. Method for controlling image forming system that does not support encryption

In the following description, the terminal controller 31 of the terminal device 30 and the second controller 21 of the second image forming device 20 that does not support encryption perform their respective control, but the description will be given with the omission of the control being performed by each controller.

At the start of control, the terminal device 30 and the second image forming device 20 perform normal communication. Unlike the first image forming device 10, the second image forming device 20 does not support encryption. The terminal device 30 performs normal communication when starting control regardless of whether the communication destination is the first image forming device 10 or the second image forming device 20.

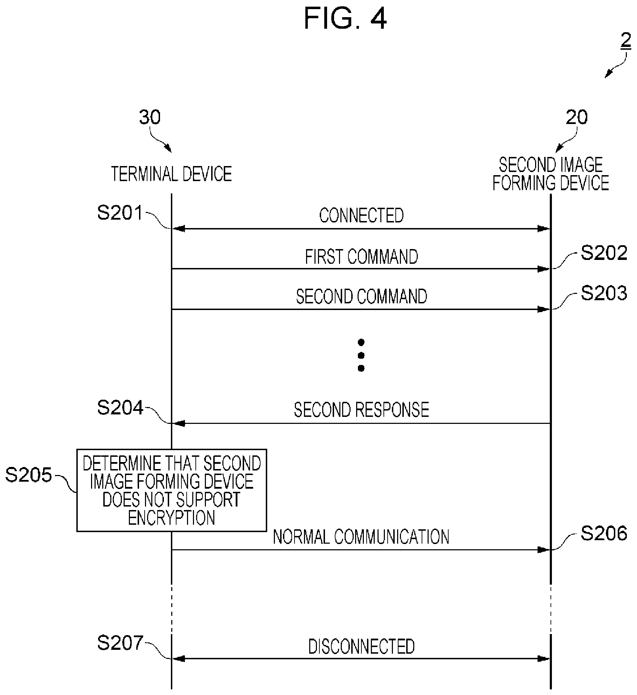

As shown in FIG. 4, the second image forming system 2 starts control, and the terminal communication section 32 of the terminal device 30 and the second communication section 22 of the second image forming device 20 are connected to each other (S201) and can communicate with each other.

The terminal device 30 transmits the first command to the second image forming device 20 (S202). In this case, the first command is a command for requesting the second image forming device 20 to provide a response related to encryption support. Next, the terminal device 30 transmits the second command to the second image forming device 20 (S203). In this case, the second command is a command for requesting the second image forming device 20 to provide a response related to communication.

The second image forming device 20 is different from the above-described first image forming device 10 in that the encryption program is not stored in the second storage section 23. Since the second image forming device 20 does not support encryption, the second image forming device 20 cannot generate the first response in response to the first command, the first response indicating that the second image forming device 20 supports encryption, and cannot transmit the first response to the terminal device 30.

The second image forming device 20 checks the operation of the second communication section 22, generates, in response to the received second command, a second response indicating that the second image forming device 20 performs normal communication, and transmits the second response to the terminal device 30 (S204).

Although the second image forming device 20 does not support encryption, the second image forming device 20 can normally support the second command transmitted by normal communication that is not encrypted, and can transmit the second response.

When the terminal device 30 does not receive the first response, but receives the second response, the terminal device 30 can determine that the second image forming device 20 does not support encryption (S205).

The terminal device 30 can determine that the second image forming device 20 cannot transmit the first response in response to the first command transmitted first because the second image forming device 20 does not support encryption, but the second image forming device 20 can transmit the second response in response to the second command transmitted next because the second image forming device 20 can normally communicate.

That is, by receiving the second response, the terminal device 30 can determine that the reason why the terminal device 30 is not able to receive the first response is not because normal communication is not able to be performed but because the second image forming device 20 does not support encryption.

Thereafter, the terminal device 30 and the second image forming device 20 do not perform encrypted communication with each other and perform normal communication (S206) until the communication is disconnected (S207).

The terminal device 30 can continuously transmit data to the second image forming device 20 through normal communication and cause the second recording section 24 to perform recording or the like.

Note that the first command may be a command for requesting identification information related to encryption support, or may be a command for requesting information of a memory switch related to encryption support.

The second image forming device 20 can store, in the second storage section 23, identification information indicating that the second image forming device 20 does not support encryption or information indicating that the memory switch is in the OFF state. The second image forming device 20 may refer to the second storage section 23 in response to the first command, generate identification information indicating that the second image forming device 20 does not support encryption or information indicating that the memory switch is in the OFF state, as the first response, and transmit the first response to the terminal device 30.

The terminal device 30 receives the first response indicating that the second image forming device 20 does not support encryption, and can determine that the second image forming device 20 does not support encryption.

As described above, at the start of control, the terminal device 30 performs normal communication with the second image forming device 20 that does not support encryption, and transmits the first command and the second command to the second image forming device 20. Based on the fact that the terminal device 30 does not receive the first response but receives the second response from the second image forming device 20, the terminal device 30 can confirm that the second image forming device 20 does not support encryption. Continuously, the terminal device 30 can normally transmit data to the second image forming device 20 and cause the second image forming device 20 to perform recording or the like.

The terminal device 30 can avoid encrypting a plain text into a cipher text and transmitting the cipher text to the second image forming device 20 that does not support encryption, and can prevent the second image forming device 20 from recording the cipher text.

### 6. Method for controlling image forming device that supports encryption

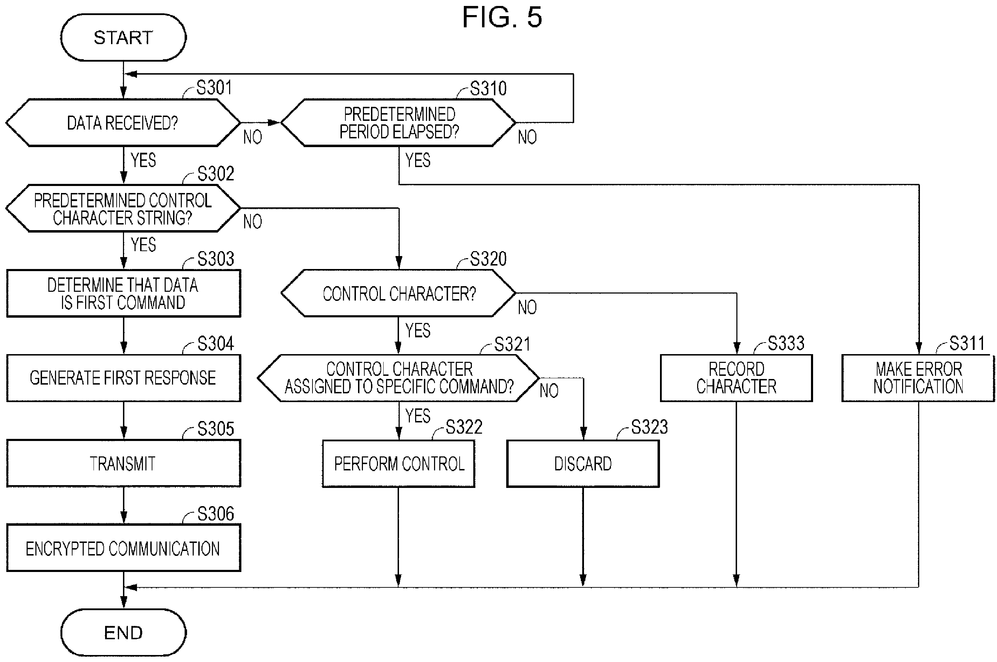

Referring to FIG. 5, a method for controlling the first image forming device 10 that supports encryption will be described. Specifically, the control in which the first image forming device 10 receives the first command and transmits the first response described above with reference to FIG. 3 will be described in detail.

In the same manner as described above, hereinafter, the terminal controller 31 of the terminal device 30 and the first controller 11 of the first image forming device 10 that supports encryption perform their respective control, but the description will be given with the omission of the control being performed by each controller. At the start of control, the terminal device 30 and the first image forming device 10 perform normal communication without encryption.

The first image forming device 10 starts control, is connected to the terminal device 30, and subsequently determines whether the first image forming device 10 has received data from the terminal device 30 (S301), and when determining that the data is received (S301: YES), the first image forming device 10 determines whether the received data is a predetermined control character string (S302).

When the first image forming device 10 determines that the data is the predetermined control character string (S302: YES), the first image forming device 10 determines that the received data is a first command for requesting a response related to encryption (S303).

The first controller 11 generates a first response indicating that the first image forming device 10 supports encryption (S304), and transmits the first response to the terminal device 30 (S305).

Although omitted in FIG. 5, as described above, the first image forming device 10 receives a second command from the terminal device 30, and transmits a second response to the terminal device 30 in response to the second command.

Thereafter, the first image forming device 10 reads the first encryption P 13a from the first storage section 13 to execute the first encryption P 13a, performs encrypted communication with the terminal device 30 (S306), and ends the process.

Once the encrypted communication is performed, thereafter, the terminal device 30 is not required to transmit the first command and the second command, so that the first image forming device 10 is not required to determine (S302) whether the received data is the predetermined control character string. The first image forming device 10 may decrypt the data received through the encrypted communication, and may perform control after the determination (S320) of whether the received data is the control character, which will be described later. The second image forming device 20 does not determine whether the received data is the control character string from the beginning (S302), but performs control after the determination (S320) of whether the received data is the control character.

Here, the control character will be described in detail. As the control character, an ASCII code which is a character code system for information communication will be described as an example.

The ASCII code includes control characters in addition to characters such as alphanumeric characters and symbols. Specifically, a correspondence relationship is defined in which a number from 0 to 127 expressed by one byte indicates which character or control character. Hereinafter, "0x" indicates a hexadecimal number. The numbers from 0 to 127 are 0x00 to 0xFF when expressed in hexadecimal notation.

Of these, the numbers from 0 to 31, 0x00 to Ox1F are assigned control characters, and 0x20 to 0xFF are assigned characters. Hereinafter, for convenience of description, each number of 0x00 to Ox1F is referred to as a control character, and each number of 0x20 to 0xFF is referred to as a character.

Some of the control characters are assigned specific commands. Examples of specific commands are listed below. Hereinafter, the control character is expressed as a relationship between (a number expressed in hexadecimal notation) and a corresponding command. For example, (0x1B) ESC means that (the number expressed in hexadecimal notation) is (0x1B), and the command corresponding to (0x1B) is ESC.
(0x09) HT, (0x0A) LF, (0x0C) FF, (0x0D) CR, (0x10) DLE, (0x11) DC1, (0x18) CAN, (0x1B) ESC, (0x1C) FS, (0x1D) GS, (0x1E) DC1, and (0x1E) US.

The first storage section 13 stores these (numbers expressed in hexadecimal notation) and corresponding commands. The first controller 11 can refer to the first storage section 13 based on these received numbers, designate the corresponding specific command, and execute the specific command. In the command, an argument or the like may be added to the control character.

In the first image forming device 10, the first command and the second command are set as specific commands assigned to the control characters. On the other hand, in the second image forming device 20, the second command is set as the specific command, but the first command is not set as the specific command. In the second image forming device 20, as described later, the first command is discarded.

The predetermined control characters are control characters other than the control characters assigned to these specific commands. A corresponding command is not assigned to the predetermined control character, and the first controller 11 does not execute a command based on the predetermined control character. The predetermined control character string is a combination of a plurality of predetermined control characters.

For example, the predetermined control character string is a control character string composed of a combination of three predetermined control characters, (0x01), (0x02), and (0x03) to which no command is assigned.

When the received data is, for example, (0x01), (0x02), and (0x03), the first image forming device 10 can determine that the received data is the predetermined control character string. As with the predetermined control character, the first image forming device 10 does not execute the command based on the predetermined control character string.

In the determination (S302) as to whether the received data is the predetermined control character string, the first image forming device 10 can determine more reliably that the received data is the first command by determining the received data not as a predetermined control character but as a predetermined control character string including a plurality of predetermined control characters. The number of predetermined control characters constituting the predetermined control character string is preferably two or more, and is preferably eight in the case of processing in byte units.

Returning to FIG. 5, the description will be continued. When the first image forming device 10 determines that the received data is not the predetermined control character string (S302: NO), the first image forming device 10 determines whether the received data is a control character (S320). That is, in (S320), the first image forming device 10 determines that the received data is not the predetermined control character string but the control character. In this case, the received data is either control characters corresponding to 0x00 to 0x1F or characters corresponding to 0x20 to 0xFF.

When the first image forming device 10 determines that the received data is a control character (S320: YES), the first image forming device 10 controls a command corresponding to the type of the control character (S322) or discards the control character (S323), as will be described later.

In this case, the control character is either a control character assigned to the specific command or a control character not assigned to the specific command. Note that the control character that is not assigned to the specific command is a predetermined control character.

Specifically, when the first image forming device 10 determines that the received control character is a control character assigned to a specific command (S321: YES), the first image forming device 10 performs the predetermined control in accordance with the specific command (S322).

That is, when the first image forming device 10 determines that the received data is a control character other than the predetermined control character for determining the first command, the first image forming device 10 performs the control corresponding to the control character.

On the other hand, when the first image forming device 10 determines that the received control character is not the control character assigned to the specific command but one predetermined control character (S321: NO), the first image forming device 10 discards the received control character (S323) and ends the control.

When the first image forming device 10 determines that the received data is not a control character (S320: NO), the first image forming device 10 can determine that the received data is a character. The first image forming device 10 causes the first recording section 14 to record the corresponding character (S333), and ends the control.

That is, when the first image forming device 10 determines that the received data is neither the predetermined control character for determining the first command nor the control character for performing the predetermined control, the first image forming device 10 causes the first recording section 14 to record the character corresponding to the received data.

The first storage section 13 stores character data corresponding to 0x20 to 0xFF and in a form recordable by the recording head of the first recording section 14. The first controller 11 of the first image forming device 10 can read the character data corresponding to any of the received 0x20 to 0xFF from the first storage section 13 and cause the first recording section 14 to record the character data.

As described above, when the first image forming device 10 that supports encryption receives data, the first image forming device 10 determines whether the data is a predetermined control character string, a control character, or a character using the character code system for information communication.

When the first image forming device 10 determines that the received data is a predetermined control character string and is a first command, the first image forming device 10 performs encrypted communication. When the first image forming device 10 determines that the received data is a control character, the first image forming device 10 controls the corresponding command or discards one predetermined control character. When the first image forming device 10 determines that the received data is a character, the first recording section 14 records the character.

Returning to the determination (S301) of whether data has been received, the description will be continued. When the first image forming device 10 determines that the first image forming device 10 does not receive data from the terminal device 30 (S301: NO), and determines that the predetermined period has elapsed (S310: YES), the first image forming device 10 makes an error notification (S311) and ends the process.

Specifically, when the first image forming device 10 does not receive data for a predetermined period of time, the first image forming device 10 determines that an error in which communication is disconnected has occurred, or determines that an error in which the first communication section 12 or the like has failed has occurred, and an input/output section (not shown) makes a notification that the error has occurred.

On the other hand, when the first image forming device 10 determines that the first image forming device 10 does not receive data from the terminal device 30 (S301: NO), and determines that the predetermined period has not elapsed (S310: NO), the first image forming device 10 returns the process to a process of determining whether the first image forming device 10 has received the data from the terminal device 30 (S301).

In addition, when the first image forming device 10 does not receive at least any one of the above-described first command and the above-described second command from the terminal device 30 for a predetermined period, the first image forming device 10 may notify the terminal device 30 of the fact as an error.

When the first image forming device 10 determines that an error related to communication as described above or an error related to transmission of the first command and the second command of the terminal device 30 has occurred, the input/output section can make a notification that the error has occurred.

As described above, the first image forming device 10 includes the first controller 11 and the first storage section 13 that stores the first encryption P 13a that is an encryption program, and can be connected to the terminal device 30.

After receiving, from the terminal device 30, the first command for requesting a response related to encryption support and subsequently receiving, from the terminal device 30, the second command for requesting a response related to communication, the first controller 11 transmits, to the terminal device 30, the first response in response to the first command, the first response indicating that the first image forming device 10 supports encryption, and subsequently transmits, to the terminal device 30, the second response in response to the second command.

Thereafter, the first controller 11 reads the first encryption P 13a from the first storage section 13 to execute the first encryption P 13a, and performs encrypted communication with the terminal device 30.

A method for controlling the first image forming device 10 that stores the first encryption P 13a and that is configured to be connected to the terminal device 30 includes, after receiving, from the terminal device 30, the first command for requesting a response related to encryption support, and subsequently receiving, from the terminal device 30, the second command for requesting a response related to communication, transmitting, to the terminal device 30, the first response in response to the first command, the first response indicating that the first image forming device 10 supports encryption, and subsequently transmitting, to the terminal device 30, the second response in response to the second command.

Thereafter, the method for controlling the first image forming device 10 includes executing the stored first encryption P 13a, and performing encrypted communication with the terminal device 30.

In the first image forming system 1 including the terminal device 30 and the first image forming device 10, the terminal device 30 transmits, to the first image forming device 10, the first command for requesting a response related to encryption support, and subsequently requests the first image forming device 10 to provide a response related to communication.

The first image forming device 10 transmits, to the terminal device 30, the first response in response to the first command, the first response indicating that the first image forming device 10 supports encryption, and subsequently transmits the second response in response to the second command.

Thereafter, the terminal device 30 and the first image forming device 10 execute the respective stored encryption programs to perform encrypted communication with each other.

According to the first image forming device 10, the method for controlling the first image forming device 10, and the first image forming system 1, the terminal device 30 can perform normal communication at the start of control regardless of whether the communication destination is the first image forming device 10 that supports encryption or the second image forming device 20 that does not support encryption.

The terminal device 30 can transmit the first command and the second command through normal communication to either the first image forming device 10 or the second image forming device 20.

Then, the terminal device 30 can determine whether the communication destination is the first image forming device 10 that supports encryption or the second image forming device 20 that does not support encryption based on the presence or absence of reception of the first response in response to the first command before receiving the second response in response to the second command.

When the communication destination is the first image forming device 10 that supports encryption, the terminal device 30 can perform encrypted data communication and cause the first image forming device 10 to perform recording or the like. On the other hand, when the communication destination is the second image forming device 20 that does not support encryption, the terminal device 30 can perform normal data communication and cause the second image forming device 20 to perform recording or the like.

The terminal device 30 can avoid encrypting a plain text into a cipher text and transmitting the cipher text to the second image forming device 20 that does not support encryption, and can prevent the second image forming device 20 from recording the cipher text.

Although embodiments have been described in detail with reference to the drawings, specific configurations are not limited to these embodiments, and modifications, substitutions, eliminations, and the like may be made without departing from the gist of the present disclosure.

For example, the predetermined control character string may include one control character instead of a plurality of control characters.

## Claims

1. An image forming device comprising: a controller; a storage section storing an encryption program; and a recording section, the image forming device being configured to be connected to a terminal device, wherein
after receiving, from the terminal device, a first command for requesting a response related to encryption support, and subsequently receiving, from the terminal device, a second command for requesting a response related to communication,
the controller
transmits, to the terminal device, a first response in response to the first command, the first response indicating that the image forming device provides the encryption support, and subsequently transmits, to the terminal device, a second response in response to the second command, and
thereafter reads the encryption program from the storage section to execute the encryption program, and performs encrypted communication with the terminal device.

2. The image forming device according to claim 1, wherein
when determining that data received from the terminal device is a control character string including a plurality of predetermined control characters,
the controller
determines the data as the first command.

3. The image forming device according to claim 2, wherein
when determining that the data is a control character other than the predetermined control characters,
the controller
performs control corresponding to the control character.

4. The image forming device according to claim 3, wherein
when determining that the data is neither the predetermined control characters nor the control character,
the controller
causes the recording section to record a character corresponding to the data.

5. The image forming device according to claim 1, wherein
the first command is a command for requesting identification information related to the encryption support, and
the controller
transmits, to the terminal device, the identification information as the first response.

6. The image forming device according to claim 1, wherein
when at least any one of the first command and the second command is not received,
the controller
transmits an error to the terminal device.

7. The image forming device according to claim 1, wherein
the storage section stores a history of the encrypted communication, and
when communicating with the terminal device,
the controller
performs the encrypted communication based on the history stored in the storage section.

8. A method for controlling an image forming device that stores an encryption program and that is configured to be connected to a terminal device, the method comprising:
after receiving, from the terminal device, a first command for requesting a response related to encryption support, and subsequently receiving, from the terminal device, a second command for requesting a response related to communication,
transmitting, to the terminal device, a first response in response to the first command, the first response indicating that the image forming device provides the encryption support, and subsequently transmitting, to the terminal device, a second response in response to the second command, and
thereafter executing the stored encryption program, and performing encrypted communication with the terminal device.

9. An image forming system comprising: a terminal device; and an image forming device, wherein
the terminal device
transmits, to the image forming device, a first command for requesting a response related to encryption support, and subsequently transmits, to the image forming device, a second command for requesting a response related to communication, and
the image forming device
transmits, to the terminal device, a first response in response to the first command, the first response indicating that the image forming device provides the encryption support, and subsequently transmits, to the terminal device, a second response in response to the second command, and
thereafter the terminal device and the image forming device execute respective stored encryption programs, and perform encrypted communication with each other.
